# NOUVEAU FASCICULE DE BREVET EUROPEEN

(11) **EP 1 111 171 B2**
(45) Date de publication et mention de la décision concernant l'opposition: **20.10.2010**
(45) Mention de la délivrance du brevet: 19.05.2004
(21) Numéro de dépôt: 00403546.5
(22) Date de dépôt: 15.12.2000
(51) Int. Cl.: E05B 49/00, E05B 65/12, E05B 65/20

(54) **Système de sécurité d'un ouvrant de véhicule automobile équipé de commutateurs sans actionnement mécanique**
Mit Schaltern ohne mechanische Betätigung ausgestattetes Sicherheitssystem einer Öffnung eines Automobils
Security system for an opening of an automobile equipped with switches without mechanical action

(30) Priorité: 21.12.1999 FR 9916183
(43) Date de publication de la demande: 27.06.2001
(73) Titulaire: VALEO SECURITE HABITACLE S.A.S., 94042 Créteil Cédex (FR)
(72) Inventeur: Suparschi, Bogdan, Troy, MI 48084 (US); Eychenne, Michel, 77176 Savigny Le Temple (FR)
(74) Mandataire: Jacquot, Ludovic R. G.

(56) Documents cités:
- EP-A- 0 916 789
- EP-A- 0 955 431
- EP-B1- 0 218 251
- DE-A- 19 633 894
- DE-C- 19 805 659
- DE-C1- 19 809 295
- DE-U1- 29 510 696

## Description

L'invention concerne un système de sécurité pour un ouvrant de véhicule automobile.

L'invention se rapporte plus particulièrement à un système de sécurité pour un ouvrant de véhicule automobile, du type « mains-libres » dans lequel l'ouvrant est maintenu en position fermée par une serrure qui est commandée par l'intermédiaire d'une poignée agencée sur la face extérieure d'un panneau de carrosserie de l'ouvrant, du type dans lequel la poignée comporte un support fixe et un organe mobile pivotant de préhension, du type dans lequel un dispositif d'interrogation est prévu pour déclencher une interrogation d'autorisation en vue de l'ouverture ou de la fermeture du véhicule, du type dans lequel le dispositif d'interrogation comporte une antenne et comporte des commutateurs intégrés à la poignée, et du type dans lequel on provoque une interrogation de déverrouillage et une interrogation de verrouillage en agissant sur deux commutateurs correspondants par l'intermédiaire de la poignée.

De manière connue, pour contrôler si l'utilisateur qui est en train d'actionner la poignée est autorisé à ouvrir la porte du véhicule, le système de sécurité détermine si l'utilisateur porte un code de sécurité adéquat, par exemple sous la forme d'un badge muni d'une clé électronique. Pour cela le véhicule émet un signal, par l'intermédiaire d'une antenne, qui va interroger le badge et déterminer la conformité du code.

Cette opération est dite d'interrogation de déverrouillage. On procède de manière similaire à la fermeture de la porte par une opération dite d'interrogation de verrouillage.

Pour que cette interrogation de déverrouillage ou de verrouillage ne soit pas émise en permanence, notamment en vue d'économiser la batterie du véhicule, il faut qu'elle soit déclenchée à un moment opportun.

On connaît déjà des systèmes de sécurité comportant des dispositifs pour déclencher une interrogation de déverrouillage ou de verrouillage en vue de l'ouverture ou de la fermeture de la porte d'un véhicule.

En général la poignée de porte comporte des moyens de commutation qui sont actionnés manuellement par l'utilisateur, notamment au moyen d'un bouton. Par exemple, avant d'ouvrir la porte, l'utilisateur appuie sur un bouton situé sur la poignée qui commande une interrogation de déverrouillage. De même, après avoir fermé la porte, l'utilisateur appuie sur un bouton situé sur la poignée qui commande une interrogation de verrouillage.

On connaît aussi, par le brevet DE-C1-198.05.659, une poignée de porte dont le support fixe comporte un commutateur du type à ampoule reed. Lorsque l'organe mobile de préhension de la poignée, qui porte un aimant, pivote vers l'extérieur, l'ampoule reed n'est plus influencée par le champ magnétique de l'aimant, ce qui provoque la commutation et l'interrogation de déverrouillage.

L'interrogation de verrouillage est déclenchée de manière classique par l'appui sur un bouton situé sur l'organe mobile de préhension de la poignée.

Ce type de dispositif n'est pas complètement satisfaisant. En effet, il est toujours nécessaire d'appuyer sur un bouton pour commander l'interrogation de déverrouillage.

De plus, le système comporte deux modules électroniques, l'un agencé sur l'organe mobile de préhension de la poignée, et l'autre sur le support fixe, ce qui complique les opérations de câblage et augmente le coût de la fabrication.

L'invention a plus particulièrement pour objet de proposer un système de sécurité qui soit plus simple de conception, moins coûteux, et plus fiable.

Dans ce but l'invention propose un système de sécurité selon la revendication.

Selon d'autres caractéristiques de l'invention :
- le support fixe de la poignée, respectivement l'organe mobile de préhension, porte un premier et un deuxième aimants séparés par un intervalle selon la trajectoire de l'organe mobile de préhension, et l'organe mobile de préhension de la poignée, respectivement le support fixe, porte un premier et un deuxième éléments sensibles décalés selon ladite trajectoire, de manière que :
   . en position de repos, les deux éléments sensibles sont situés en regard de l'intervalle et ne commutent pas ;
   . en position d'interrogation de déverrouillage, le premier élément sensible est situé en regard du premier aimant et commute, et le deuxième élément sensible est situé en regard de l'intervalle ; et
   . en position d'interrogation de verrouillage, le premier élément sensible est situé en regard de l'intervalle, et le deuxième élément sensible est situé en regard du deuxième aimant et commute ;
- le support fixe de la poignée, respectivement l'organe mobile de préhension, porte un seul aimant commun aux deux commutateurs, et l'organe mobile de préhension de la poignée, respectivement le support fixe, porte un premier et un deuxième éléments sensibles, séparés par un intervalle selon la trajectoire de l'organe mobile de préhension, de manière que :
   . en position de repos, l'aimant commun est situé en regard de l'intervalle et les éléments sensibles ne commutent pas ;
   . en position d'interrogation de déverrouillage, l'aimant commun est situé en regard du deuxième élément sensible qui commute ; et
   . en position d'interrogation de verrouillage, l'aimant commun est situé en regard du premier élément sensible qui commute ;
- l'organe mobile de préhension est monté pivotant vers l'extérieur selon une course de déverrouillage et vers l'intérieur selon une course de verrouillage ;
- l'antenne est intégrée à l'organe mobile de préhension de la poignée ;
- l'antenne et les deux éléments sensibles sont portés par l'organe mobile de préhension, ou le support fixe de la poignée, et un faisceau de raccordement est commun à l'antenne et aux deux éléments sensibles.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective éclatée qui représente les principaux composants d'un système de sécurité pour un ouvrant de véhicule automobile ;
- la figure 2 est une vue qui représente un mode de réalisation de l'invention dans lequel le dispositif de commutation comporte deux éléments sensibles superposés portés par l'organe mobile de préhension et deux aimants fixes, et qui est représenté en position de repos ;
- la figure 3 est une vue similaire à celle de la figure 2 qui représente le dispositif de commutation en position d'interrogation de déverrouillage ;
- la figure 4 est une vue similaire à celle de la figure 2 qui représente le dispositif de commutation en position d'interrogation de verrouillage ;
- la figure 5 est une vue similaire à celle de la figure 2 qui représente un troisième mode de réalisation de l'invention dans lequel le dispositif de commutation comporte deux éléments sensibles et un seul aimant fixe, et qui est représenté en position de repos.

Dans la description qui va suivre, les éléments identiques, similaires ou analogues seront affectés de références identiques.

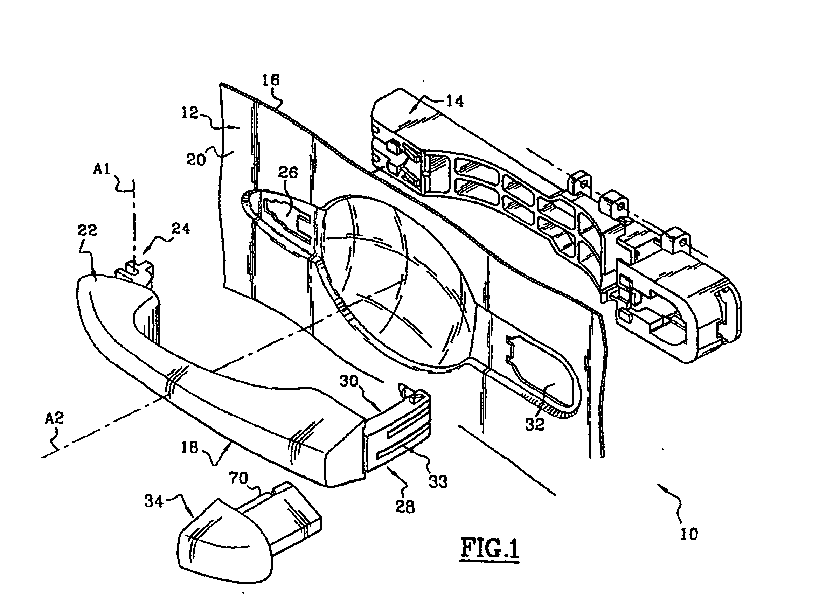

On a illustré sur la figure 1 un système de sécurité 10 de véhicule automobile de conception générale connue et comportant notamment une poignée d'ouvrant de véhicule automobile qui est destinée à être montée sur un panneau extérieur 12 de carrosserie de l'ouvrant qui est par exemple une porte latérale de véhicule.

La poignée comporte essentiellement un support fixe 14, qui est fixé du côté d'une face intérieure 16 du panneau 12, et un organe mobile pivotant de préhension 18 qui est agencé du côté de la face extérieure 20 du panneau 12, et qui est articulé sur le support 14, autour d'un axe principal A1 sensiblement parallèle à un plan général du panneau 12.

Dans la suite de la description, on définira arbitrairement comme direction longitudinale la direction générale, ici globalement horizontale, de l'organe mobile de préhension 18 au repos qui se présente sensiblement sous la forme d'une barre longitudinale.

Le plan perpendiculaire à la direction longitudinale sera qualifié de plan transversal.

Le côté de l'organe mobile de préhension 18 qui comporte l'axe A1 d'articulation sera qualifié de côté arrière et le côté opposé sera qualifié de côté avant. Cette orientation d'arrière en avant correspond sensiblement à une orientation de la gauche vers la droite sur la figure 1.

Le côté gauche et le côté droit de la poignée seront définis selon le plan parallèle au plan général du panneau de carrosserie, et selon une orientation d'arrière en avant.

La direction sensiblement perpendiculaire au plan général du panneau de carrosserie 12 sera qualifiée de direction axiale suivant l'axe de montage et d'assemblage A2 des éléments de la poignée sur le panneau 12.

Pour permettre l'articulation de l'organe mobile de préhension 18, son extrémité arrière 22 comporte un timon 24 destiné à être engagé au travers d'un orifice arrière 26 du panneau de carrosserie 12, afin d'être monté à rotation autour d'un pivot du support 14.

L'extrémité avant 28 de l'organe mobile de préhension 18 comporte un pied avant 30 qui s'étend axialement vers l'intérieur au travers d'un orifice avant 32 aménagé dans le panneau 12 de manière à coopérer avec une tringlerie (non représentée) qui relie l'organe mobile de préhension 18 à une serrure mécanique d'ouvrant.

Conformément aux enseignements de l'invention, selon le mode de réalisation préféré de l'invention, le pied avant 30 comporte un dispositif de commutation 33.

Un embout de poignée 34 s'étend aussi axialement vers l'intérieur au travers de l'orifice avant 32 et il est fixé à l'extrémité longitudinale avant du support de poignée 14.

Un utilisateur est ainsi susceptible de manoeuvrer l'organe mobile de préhension 18 en saisissant une partie sensiblement centrale de l'organe mobile 18 et en le tirant axialement vers l'extérieur, selon une course dite de déverrouillage, depuis une position de repos Pr jusqu'à une position dite d'interrogation de déverrouillage Pd. Cette manoeuvre provoque un mouvement de rotation autour de l'axe A1 de l'organe mobile 18 dans le sens anti-horaire jusqu'à atteindre une butée (non représentée).

L'utilisateur est aussi susceptible de pousser l'organe mobile de préhension 18 axialement vers l'intérieur, selon une course dite de verrouillage, depuis la position de repos Pr jusqu'à une position dite d'interrogation de verrouillage Pv. Cette manoeuvre provoque aussi un mouvement de rotation autour de l'axe A1 de l'organe mobile 18 dans le sens horaire, jusqu'à une butée (non représentée).

Selon le mode de réalisation préféré de l'invention, une antenne 62 est intégrée à l'or<gane mobile de préhension 18, et les fils de raccordement électrique 64 de l'antenne 62 sont joints aux fils de raccordement électrique 66 du module de commutateurs 36 pour former un seul faisceau électrique 68.

On peut aussi placer l'antenne 62 dans l'embout de poignée 34, par exemple par surmoulage, de manière que les fils de raccordement électrique 66 du module de commutateurs 36 et ceux 64 de l'antenne 62 puissent être joints pour former un seul faisceau électrique 68.

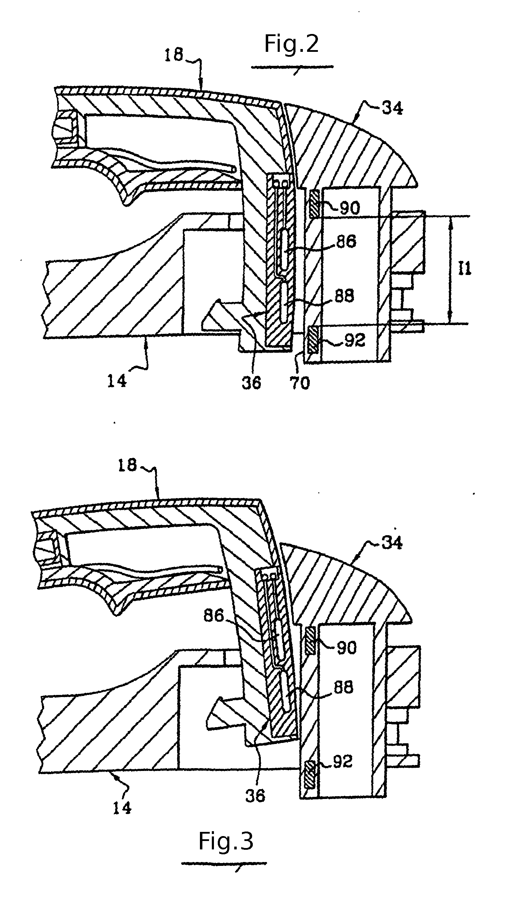

Les figures 2, 3 et 4 représentent un mode de réalisation de l'invention.

Selon ce mode de réalisation le module de commutateurs 36 comporte deux éléments sensibles 86, 88 superposés suivant la direction axiale, ici une ampoule reed extérieure 86 et une ampoule reed intérieure 88.

Un aimant extérieur 90 et un aimant intérieur 92 fixes, séparés par un intervalle I1 selon la direction axiale, sont intégrés dans la face transversale arrière 70 de l'embout de poignée 34, par exemple par surmoulage. Ces deux aimants 90, 92 sont ici contenus dans le même plan axial et longitudinal que l'ampoule reed extérieure 86 et l'ampoule reed intérieure 88, c'est à dire dans le plan de coupe des figures 2 à 4.

A titre de variante, chaque couple d'une ampoule et d'un aimant associé peut être situé dans un plan décalé latéralement par rapport à celui de l'autre couple.

Dans la position de repos Pr qui est représentée à la figure 2, les ampoules reed 86, 88 se trouvent en vis-à-vis de l'intervalle I1, de manière qu'elles ne puissent pas être influencées par les champs magnétiques des aimants 90, 92.

Dans la position d'interrogation de déverrouillage Pd qui est représentée à la figure 3, le module de commutateurs 36 se déplace vers l'extérieur comme décrit précédemment. Lorsque l'organe mobile de préhension 18 arrive au voisinage de sa butée extérieure, l'ampoule reed extérieure 86 se trouve sensiblement en vis-à-vis de l'aimant extérieur 90. Celui-ci provoque alors la commutation de l'ampoule reed extérieure 86 et donc l'interrogation de déverrouillage ld, sans que l'ampoule reed intérieure 88 ne commute.

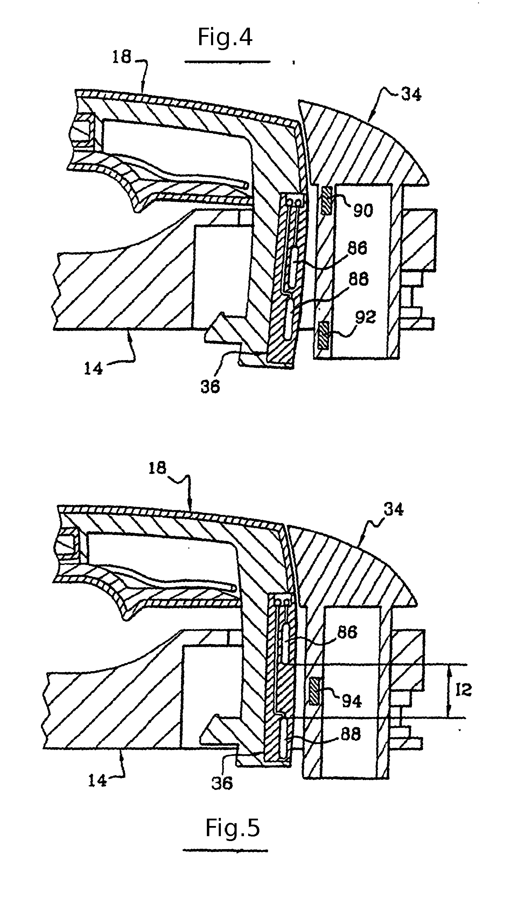

De manière similaire, dans la position d'interrogation de verrouillage Pv qui est représentée à la figure 4, le module de commutateurs 36 se déplace vers l'intérieur. Lorsque l'organe mobile de préhension 18 arrive au voisinage de sa butée intérieure, l'ampoule reed intérieure 88 se trouve sensiblement en vis-à-vis de l'aimant intérieur 92. Celui-ci provoque alors la commutation de l'ampoule reed intérieure 88 et donc l'interrogation de verrouillage lv, sans que l'ampoule reed extérieure 86 ne commute.

Un autre mode de réalisation de l'invention est représenté à la figure 5. Selon ce mode de réalisation, l'embout de poignée 34 comporte un aimant fixe commun 94 qui est situé, dans la position de repos Pr de la poignée, à mi-distance de deux éléments sensibles 86, 88 portés par un module de commutateurs 36, ici une ampoule reed extérieure 86 et une ampoule reed intérieure 88. Les deux ampoules reed 86, 88 sont séparées par un intervalle I2 selon la direction axiale.

Selon un fonctionnement similaire à celui du dispositif de commutation selon le mode de réalisation préféré de l'invention, lorsque la poignée est en position de repos Pr, comme on l'a représenté à la figure 5, aucune ampoule reed 86, 88 n'est influencée par le champ magnétique de l'aimant commun 94, celui-ci se trouvant en vis-à-vis de l'intervalle I2.

Dans la position d'interrogation de déverrouillage Pd (non représentée), l'ampoule reed intérieure 88 se trouve en vis-à-vis de l'aimant commun 94 ce qui produit sa commutation et l'interrogation de déverrouillage Id.

Dans la position d'interrogation de verrouillage Pv (non représentée), l'ampoule reed extérieure 86 se trouve en vis-à-vis de l'aimant commun 94 ce qui produit sa commutation et l'interrogation de verrouillage Iv.

Selon une variante de réalisation de l'invention, on prévoit des moyens d'indexation mécaniques ou électromagnétiques pour déterminer notamment la position de repos Pr de l'organe mobile de préhension 18 par rapport au support fixe 14.

## Revendications

1. Système de sécurité (10) d'un ouvrant de véhicule automobile,
du type dans lequel l'ouvrant est maintenu en position fermée par une serrure qui est commandée par l'intermédiaire d'une poignée agencée sur la face extérieure (20) d'un panneau de carrosserie (12) de l'ouvrant,
du type dans lequel la poignée comporte un support fixe (14, 34) et un organe mobile pivotant de préhension (18),
du type dans lequel un dispositif d'interrogation est prévu pour déclencher une interrogation d'autorisation en vue de l'ouverture ou de la fermeture du véhicule,
du type dans lequel le dispositif d'interrogation comporte une antenne (62) et comporte des commutateurs intégrés à la poignée, et
du type dans lequel on provoque une interrogation de déverrouillage (Id) et une interrogation de verrouillage (Iv) en agissant sur deux commutateurs correspondants par l'intermédiaire de la poignée,
**caractérisé en ce que** les deux interrogations (Id, Iv) de déverrouillage et de verrouillage sont provoquées par deux commutateurs sans actionnement mécanique desdits commutateurs dont le déclenchement est commandé uniquement par le déplacement relatif de l'organe mobile pivotant de préhension (18) par rapport au support fixe (14, 34) de la poignée, chaque commutateur comprend au moins un aimant (52, 90, 92, 94) et au moins un élément sensible (48, 50, 86, 88) du type à ampoule reed, ou du type à effet Hall qui commute lorsque l'aimant (52, 90, 92, 94) occupe une position déterminée par rapport à l'élément sensible (48, 50, 88, 88), et l'aimant (90, 92, 94) est porté par le support fixe (14, 34) ou par l'organe mobile de préhension (18) de la poignée, et l'élément sensible (86, 88) est porté par l'organe mobile de préhension (18) de la poignée, respectivement le support fixe (14, 34).

2. Système de sécurité (10) selon la revendication 1, **caractérisé en ce que** le support fixe (14, 34) de la poignée, respectivement l'organe mobile de préhension (18), porte un premier et un deuxième aimants (90, 92) séparés par un intervalle (11) selon la trajectoire de l'organe mobile de préhension (18), et **en ce que** l'organe mobile de préhension (18) de la poignée, respectivement le support fixe (14. 34), porte un premier et un deuxième éléments sensibles (86. 88) décalés selon ladite trajectoire, de manière deuxième éléments sensibles (86.
○ en position de repos (Pr), les deux éléments sensibles (86, 88) sont situés en regard de l'intervalle (I1) et ne commutent pas;
○ en position d'interrogation de déverrouillage (Pd), le premier élément sensible (86) est situé en regard du premier aimant (90) et commute et le deuxième élément sensible (88) est situé en regard de l'intervalle (I1) ; et
○ en position d'interrogation de verrouillage (Pv), le premier élément sensible (66) est situé en regard de l'intervalle (11), et le deuxième élément sensible (88) est situé en regard du deuxième aimant (92) et commute.

3. Système de sécurité (10) selon l'une quelconque des revendications précédentes, **caractérisé en ce que** l'organe mobile de préhension (18) est monté pivotant vers l'extérieur selon une course de déverrouillage et vers l'intérieur selon une course de verrouillage.

4. Système de sécurité (10) selon l'une quelconque des revendications précédentes, **caractérisé en ce que** l'antenne (62) est intégrée à l'organe mobile de préhension (18) de la poignée.

5. Systéme de sécurité (10) selon l'une quelconque des revendications 1 à 3, **caractérisé en ce que** l'antenne (62) et les deux éléments sensibles (48, 50, 86, 88) sont portés par l'organe mobile de préhension, (18) ou le support fixe (14, 34) de la poignée, et **en ce qu'**un faisceau de raccordement (68) est commun à l'antenne (62) et aux deux éléments sensibles (48, 50, 86, 88).

## Claims

1. Security system (10) of a motor vehicle opening leaf,
of the type in which the opening leaf is kept in the closed position by a lock which is operated via a handle arranged on the external face (20) of a bodywork panel (12) of the opening leaf,
of the type in which the handle comprises a fixed support (14, 34) and a pivoting mobile member (18) for grasping,
of the type in which an interrogation device is provided to trigger interrogation for authorization to open or close the vehicle,
of the type in which the interrogation device comprises an antenna (62) and comprises switches built into the handle, and
of the type in which unlocking interrogation (Id) and locking interrogation (Iv) are brought about by action on two corresponding switches via the handle,
**characterized in that** the two interrogations (Id, Iv) for unlocking and for locking, are brought about by two switches with no mechanical actuation of the said switches, the triggering of which is brought about solely by the relative movement of the pivoting mobile member (18) for grasping with respect to the fixed support (14, 34) of the handle, each switch comprises at least one magnet (52, 90, 92, 94) and at least one sensitive element (48, 50, 86, 88) of the reed switch type or Hall effect type which switches when the magnet (52, 90, 92, 94) occupies a determined position with respect to the sensitive element (48, 50, 86, 88), and the magnet (90, 92, 94) is borne by the fixed support (14, 34) or by the mobile member (18) of the handle for grasping, and the sensitive element (86, 88) is borne by the mobile member (18) of the handle for grasping or, respectively, by the fixed support (14, 34).

2. Security system (10) according to Claim 1, **characterized in that** the fixed support (14, 34) of the handle or, respectively, the mobile member (18) for grasping, bears a first and a second magnet (90, 92) which are separated by a gap (I1) in the path of the mobile member (18) for grasping, and **in that** the mobile member (18) of the handle for grasping, or, respectively, the fixed support (14, 34) bears a first and a second sensitive element (86, 88) which are offset along the said path, so that:
- in the rest position (Pr), the two sensitive elements (86, 88) are located facing the gap (I1) and do not switch;
- in the unlocking interrogation position (Pd), the first sensitive element (86) is located facing the first magnet (90) and switches, and the second sensitive element (88) is located facing the gap (I1); and
- in the locking interrogation position (Pv), the first sensitive element (86) is located facing the gap (I1) and the second sensitive element (88) is located facing the second magnet (92) and switches.

3. Security system (10) according to either of the preceding claims, **characterized in that** the mobile member (18) for grasping is mounted so that it can pivot outwards along an unlocking travel and inwards along a locking travel.

4. Security system (10) according to any of the preceding claims, **characterized in that** the antenna (62) is incorporated into the mobile member (18) of the handle for grasping.

5. Security system (10) according to any of Claims 1 to 3, **characterized in that** the antenna (62) and the two sensitive elements (48, 50, 86, 88) are borne by the mobile member (18) for grasping or by the fixed support (14, 34) of the handle, and **in that** a wiring harness (68) is common to the antenna (62) and to the two sensitive elements (48, 50, 86, 88).

## Patentansprüche

1. Sicherheitssystem (10) einer Kraftfahrzeugtür, vom Typ, bei dem die Tür über ein Schloss in Schließstellung gehalten wird, das über einen an der Außenseite (20) eines Karosserieblechteils (12) der Tür angeordneten Griff gesteuert wird, wobei der Griff einen festen Träger (14, 34) und ein schwenkbewegliches Greifglied (18) enthält, wobei eine Abfragevorrichtung vorgesehen ist, um eine Berechtigungsabfrage zwecks Öffnen bzw. Schließen des Fahrzeugs auszulösen,
wobei die Abfragevorrichtung eine Antenne (62) und im Griff integrierte Schalter enthält, und
wobei eine Entriegelungsabfrage (id) und eine Verriegelungsabfrage (iv) hervorgerufen werden, indem über den Griff auf zwei entsprechende Schalter eingewirkt wird,
**dadurch gekennzeichnet, dass** die beiden Abfragen (id, iv) zum Entriegeln und Verriegeln über zwei Schalter ohne mechanische Betätigung der Schalter hervorgerufen werden, deren Auslösen nur durch relative Verlagerung des schwenkbeweglichen Greifglieds (18) bezüglich des festen Trägers (14, 34) des Griffs gesteuert wird, dass jeder Schalter zumindest einen Magneten (52, 90, 92, 94) und zumindest ein sensitives Element (48, 50, 86, 88) vom Typ Reed-Schalter oder vom Typ Hall-Element enthält, das dann schaltet, wenn der Magnet (52, 90, 92, 94) eine bestimmte Stellung bezüglich des sensitiven Elements (48, 50, 86, 88) einnimmt, und dass der Magnet (90, 92, 94) von dem festen Träger (14, 34) bzw. von dem beweglichen Greifglied (18) des Griffs getragen wird und das sensitive Element (86, 88) von dem beweglichen Greifglied (18) des Griffs bzw. von dem festen Träger (14, 34) getragen wird.

2. Sicherheitssystem (10) nach Anspruch 1, **dadurch gekennzeichnet, dass** der feste Träger (14, 34) des Griffs bzw. das bewegliche Greifglied (18) einen ersten und einen zweiten Magneten (90, 92) trägt, die durch einen Spalt (i1) entlang der Bewegungsbahn des beweglichen Greifglieds (18) voneinander getrennt sind, und dass das bewegliche Greifglied (18) des Griffs bzw. der feste Träger (14, 34) ein erstes und ein zweites sensitives Element (86, 88) trägt, die entlang der genannten Bewegungsbahn versetzt sind, so dass
- in Ruhestellung (Pr) die beiden sensitiven Elemente (86, 88) dem Spalt (i1) gegenüberliegen und nicht schalten,
- in Entriegelungsabfragestellung (Pd) das erste sensitive Element (86) dem ersten Magneten (90) gegenüberliegt und schaltet und das zweite sensitive Element (88) dem Spalt (i1) gegenüberliegt, und
- in Verriegelungsabfragestellung (Pv) das erste sensitive Element (86) dem Spalt (i1) gegenüberliegt und das zweite sensitive Element (88) dem zweiten Magneten (92) gegenüberliegt und schaltet,

3. Sicherheitssystem (10) nach einem der vorhergehenden Ansprüche, **dadurch gekennzeichnet, dass** das bewegliche Greifglied (18) entlang eines Entriegelungswegs nach außen und entlang eines Verriegelungswegs nach innen schwenkbeweglich gelagert ist.

4. Sicherheitssystem (10) nach einem der vorhergehenden Ansprüche, **dadurch gekennzeichnet, dass** die Antenne (62) im beweglichen Greifglied (18) des Griffs integriert ist.

5. Sicherheitssystem (10) nach einem der Ansprüche 1 bis 3, **dadurch gekennzeichnet, dass** die Antenne (62) und die beiden sensitiven Elemente (48, 50, 86, 88) von dem beweglichen Greifglied (18) bzw. von dem festen Träger (14, 34) des Griffs getragen werden und dass eine Anschlussleitung (68) der Antenne (62) und den beiden sensitiven Elementen (48, 50, 86, 88) gemein ist.
